# EUROPEAN PATENT SPECIFICATION

(11) **EP 4 080 636 B1**
(45) Date of publication and mention of the grant of the patent: **30.10.2024**
(21) Application number: 21867123.8
(22) Date of filing: 08.09.2021
(51) Int. Cl.: H01M 10/0567, H01M 10/0525, H01M 10/42, H01M 4/525, H01M 10/0569

(54) **NON-AQUEOUS ELECTROLYTE FOR LITHIUM SECONDARY BATTERY AND LITHIUM SECONDARY BATTERY INCLUDING THE SAME**
NICHTWÄSSRIGER ELEKTROLYT FÜR LITHIUMSEKUNDÄRBATTERIE UND LITHIUMSEKUNDÄRBATTERIE DENSELBEN UMFASSEND
ÉLECTROLYTE NON-AQUEUX POUR BATTERIE SECONDAIRE AU LITHIUM ET BATTERIE SECONDAIRE AU LITHIUM LE COMPRENANT

(30) Priority: 09.09.2020 KR 20200115054
(43) Date of publication of application: 26.10.2022
(73) Proprietor: LG Energy Solution, Ltd., Seoul 07335 (KR)
(72) Inventor: KIM, Ha Eun, Daejeon 34122 (KR); KIM, Hyun Seung, Daejeon 34122 (KR); LEE, Chul Haeng, Daejeon 34122 (KR); OH, Jeong Woo, Daejeon 34122 (KR)
(74) Representative: Hoffmann Eitle
(86) International application number: PCT/KR2021/012236
(87) International publication number: WO 2022/055258

(56) References cited:
- EP-A1- 2 144 321
- EP-A1- 3 913 719
- WO-A1-2020/175907
- CN-A- 110 021 785
- CN-A- 111 244 546
- JP-B2- 6 673 225
- KR-A- 20120 101 414
- KR-A- 20160 142 338
- KR-A- 20200 089 623
- US-A1- 2020 251 769

## Description

### TECHNICAL FIELD

The present invention relates to a non-aqueous electrolyte for a lithium secondary battery and a lithium secondary battery including the same.

### BACKGROUND ART

A lithium secondary battery is generally prepared by a method in which, after an electrode assembly is formed by interposing a separator between a positive electrode, which includes a positive electrode active material formed of a transition metal oxide containing lithium, and a negative electrode including a negative electrode active material capable of storing lithium ions and the electrode assembly is inserted into a battery case, a non-aqueous electrolyte that becomes a medium for transferring the lithium ions is injected thereinto and the battery case is then sealed.

The lithium secondary battery may be miniaturized and have high energy density and working voltage, and thus has been applied to various fields such as mobile devices, electronic products, and electric vehicles. As the application fields of the lithium secondary battery become diverse, the lithium secondary battery is gradually requiring high physical properties, and particularly there is a need for the development of a lithium secondary battery, which can be stably driven even under high-temperature conditions.

Meanwhile, when the lithium secondary battery is operated under high-temperature conditions, anions, PF₆⁻ may be pyrolyzed from a lithium salt such as LiPF₆ contained in an electrolyte to generate a Lewis acid such as PF₅, which reacts with moisture to generate HF. The decomposed products such as PF5 and HF may not only destroy films formed on the surfaces of the electrodes, but also cause a decomposition reaction of an organic solvent. In addition, the decomposed products may react with decomposed products of a positive electrode active material to dissolve transition metal ions, and the dissolved transition metal ions may be electrodeposited on a negative electrode to destroy a film formed on the surface of the negative electrode.

Thus, when an electrolyte decomposition reaction continues on the destroyed film, the performance of the battery is further reduced, and thus there is a need for the development of a secondary battery which can maintain excellent performance even under high-temperature conditions.

WO2020/175907 A1, CN 111 244 546 A and KR 2020 0089623 A disclose non-aqueous electrolyte solutions for lithium secondary batteries, comprising at least one lithium salt dissolved in a carbonate-based solvent, to which an alkynyloxycarbonyl-substituted N-heterocyclic compound is added, optionally in admixture with lithium difluorophosphate (LiDFP).

EP 2 144 321 A1, CN 110 021 785 A, KR 2012 0101414 A and JP 6 673225 B2 refer to the use of fluorinated linear carbonate compounds as cosolvent or co-additive, optionally in association with LiDFP, in the electrolytic solution of a lithium secondary battery.

KR 2016 0142338 A describes a non-aqueous electrolyte for lithium-ion battery comprising a lithium salt dissolved in a carbonate-based solvent, and an additive mixture comprising three specific compounds.

US 2020/251769 A1 is directed to a non-aqueous electrolyte for lithium-ion battery, comprising a lithium salt, a first non-aqueous solvent, and an additive mixture comprising LiDFP as first operative additive and either fluoroethylene carbonate or vinylene carbonate as second operative additive.

### DISCLOSURE OF THE INVENTION

### TECHNICAL PROBLEM

An aspect of the present invention provides a non-aqueous electrolyte which assists in forming a positive electrode film by including an additive in a particular combination, and a lithium secondary battery including the same.

### TECHNICAL SOLUTION

According to an aspect of the present invention, there is provided a non-aqueous electrolyte for a lithium secondary battery including: a lithium salt; an organic solvent; a compound represented by Formula 1 below as a first additive; lithium difluorophosphate as a second additive; and a compound represented by Formula 2 below as a third additive.

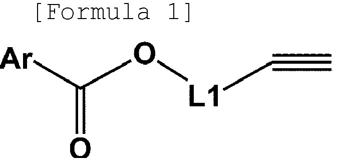

In Formula 1,
Ar is a 5-membered or 6-membered nitrogen-containing ring, and
L1 is a C1-C3 alkylene group, and 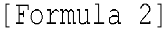 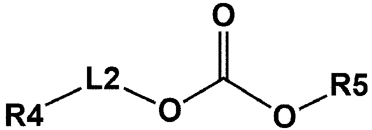
In Formula 2,
   L2 is a direct linkage, or a C1-C3 alkylene group,
   R4 is a C1-C3 alkyl group substituted with at least one fluorine, and
   R5 is a C1-C3 alkyl group.

According to another aspect of the present invention, there is provided a lithium secondary battery including: a positive electrode containing a positive electrode active material; a negative electrode containing a negative electrode active material; a separator interposed between the negative electrode and the positive electrode; and the non-aqueous electrolyte for a lithium secondary battery.

### ADVANTAGEOUS EFFECTS

To solve the above-described limitations, the present invention may provide a non-aqueous electrolyte for a lithium secondary battery including a combination of additives capable of reducing the dissolution of a positive electrode by forming a rigid film on the surface of the positive electrode.

In addition, the present invention may provide a lithium secondary battery having improved high-temperature storage characteristics and lifetime characteristics by including the non-aqueous electrolyte for a lithium secondary battery.

### BEST MODE FOR CARRYING OUT THE INVENTION

Hereinafter, the present invention will be described in more detail.

In general, anions of LiPF₆, which is a lithium salt widely used in a lithium secondary battery, forms decomposed products such as hydrogen fluoride (HF) and PF₅ by pyrolysis, moisture, or the like. These decomposed products have the properties of an acid, and degrade a film or the surface of an electrode in a battery.

For example, the decomposed products easily dissolve transition metals constituting a positive electrode to an electrolyte, the dissolved transition metals move to a negative electrode through the electrolyte, and then electrodeposited onto a solid electrolyte interphase (SEI) formed on the negative electrode to cause a further electrolyte decomposition reaction.

Since such a series of reactions reduce the amount of available lithium ions in the battery, the capacity of the battery is not only degraded, but a further electrolyte decomposition reaction is also carried out, thereby leading to an increase in resistance.

The present invention provides a non-aqueous electrolyte for a lithium secondary battery and a lithium secondary battery including the same, the non-aqueous electrolyte including a combination of additives capable of suppressing the dissolution of the transition metals by forming a rigid film on the surface of the positive electrode.

The present inventors used a compound represented by Formula 1 below, lithium difluorophosphate, and a compound represented by Formula 2 below as a first to third additive of the electrolyte, respectively, and accordingly, confirmed that these additives have an effect of efficiently forming films on the negative electrode and the positive electrode.

Specifically, the first additive is a substance for assisting in improving durability of the negative electrode, and first reductively decomposed at a relatively high potential of the negative electrode to form a stable film. The film is polymerized and thus durability of the battery is excellent.

Specifically, since the compound represented by Formula 1 includes a propargyl functional group, an SEI having high passivation ability is formed on the surface of the negative electrode while the functional group is reductively decomposed, and thus, high-temperature durability of the negative electrode itself may not only be improved, but electrodeposition of transition metals on the surface of the negative electrode may also be prevented. In addition, the compound represented by Formula 1 may function to make the dissolution of impurities difficult by being adsorbed on the surface of the metallic impurities included in the positive electrode due to the propargyl group, and accordingly, an internal short circuit, which may occur by precipitation of the dissolved metal ions on the negative electrode, may be suppressed. Furthermore, since the propargyl group is easily reduced on the surface of the negative electrode, it may form a stable film on the surface of the negative electrode, and thus, a self-discharge reaction of the graphite-based, silicon-based negative electrode due to a further reduction decomposition reaction of the electrolyte caused by instability of the SEI may be prevented.

The second additive is a substance that does not have a high reaction potential, but makes a great contribution to improving durability by forming an effective film for both the positive electrode and the negative electrode. Lithium ion components generated by the decomposition during an initial charge may form a stable SEI on the surface of the negative electrode, and the SEI formation may not only improve Li mobility to the negative electrode, but also reduce an interfacial resistance. In particular, difluorophosphate anions generated by the decomposition during an initial charge are present on the surface of the positive electrode, and thus may stabilize lattice oxygen of a positive electrode active material present on the surface of the positive electrode and prevent a further structural collapse.

The third additive is a carbonate solvent containing fluorine, and not only reinforces the negative electrode film, but also forms, on the positive electrode, a stable cathode-electrolyte interface (CEI) that is represented by a metal fluoride.

When the addition of the first additive first forms the rigid negative electrode film, the further decomposition reaction on the surface of the negative electrode may be reduced, and thus the consumption of positive electrode film-forming additives such as the second and third additives may be reduced. The additives having increased remaining amount may act much on the positive electrode that takes more time to form a film than the negative electrode, and accordingly, may reinforce the positive electrode more efficiently. (See J. Phys. Chem. C 2014, 118, 10631-10639, which relates to protecting mechanism of the positive and negative electrodes by methyl 2,2,2-trifluoroethyl carbonate)

### Non-aqueous Electrolyte

A non-aqueous electrolyte of the present invention includes a lithium salt, an organic solvent, a compound represented by Formula 1 below as a first additive, lithium difluorophosphate as a second additive, a compound represented by Formula 2 below as a third additive.

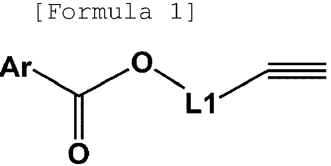

In Formula 1,
Ar is a 5-membered or 6-membered nitrogen-containing ring, and
L1 is a C1-C3 alkylene group, and 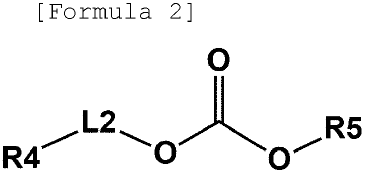
in Formula 2,
   L2 is a direct linkage, or a C1-C3 alkylene group,
   R4 is a C1-C3 alkyl group substituted with at least one fluorine, and
   R5 is a C1-C3 alkyl group.

### (1) Additive

In an embodiment of the present invention, Ar in Formula 1 includes at least two nitrogen atoms, and more specifically, the compound represented by Formula 1 may be represented by Formula 1A below.

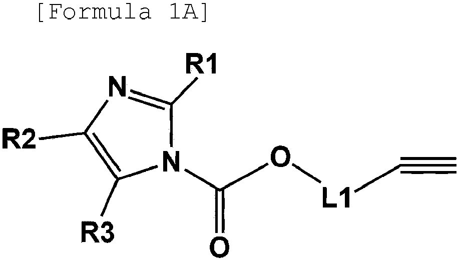

In Formula 1A,
L1 is a C1-C3 alkylene group, and
R1 to R3 are each independently hydrogen, or a C1-C3 alkyl group.

L1 in Formula 1 may be a methylene group or an ethylene group, and more specifically, a methylene group.

R1 to R3 in Formula 1 may be each independently hydrogen or a methyl group, and more specifically, each of R1 to R3 may be hydrogen.

In an embodiment of the present invention, the compound represented by Formula 1 may be propargyl 1H-imidazole-1-carboxylate.

In an embodiment of the present invention, L2 in Formula 2 may be a direct linkage or a methylene group, and more specifically, a methylene group.

R4 in Formula 2 may be a C1 or C2 alkyl group substituted with at least one fluorine, and more specifically, a trifluoromethyl group.

R5 in Formula 2 may be a methyl group or an ethyl group, and more specifically, a methyl group.

In an embodiment of the present invention, the compound represented by Formula 2 may be methyl 2,2,2-trifluoroethyl carbonate.

In an embodiment of the present invention, the content of the first additive may be 0.1 wt% to 1 wt%, preferably, 0.1 wt% to 0.5 wt% based on a total weight of the non-aqueous electrolyte. When the content of the first additive is in the above range, the first additive may react in the negative electrode with high potential to more quickly and stably form a rigid polymer film on the negative electrode, and accordingly, there is an effect of improving lifetime and high-temperature durability of the battery.

Specifically, if the content of the first additive is less than 0.1 wt%, the effect of the addition of the first additive may be slight, and if the content of the first additive is greater than 1 wt%, the resistance of the negative electrode film increases and thus the resistance of the battery also increases greatly, so that there may occur problems of reducing the output and increasing heat that is generated in the operation.

In an embodiment of the present invention, the content of the second additive may be 0.1 wt% to 1.5 wt%, preferably, 0.5 wt% to 1.5 wt% based on the total weight of the non-aqueous electrolyte. When the content of the second additive is in the above range, the second additive may form a film containing P and O, which are effective for improving the durability, on the surface of the negative electrode, and, on the positive electrode, may stabilize oxygen constituting the positive electrode active material and effectively form CEI, and thus may ultimately improve the durability of the battery.

If the content of the second additive is less than 0.1 wt%, the effect of the addition of the second additive may be slight, and if the content of the second additive is greater than 1.5 wt%, the second additive is difficult to be dissolved in the present electrolyte solvent system, and thus may cause an increase in the viscosity of the electrolyte and a decrease in the ionic conductivity, and accordingly, there may occur problems of reducing the output of the battery and reducing wetting in the electrodes.

In an embodiment of the present invention, the content of the third additive may be 1 wt% to 5 wt%, preferably, 2 wt% to 4 wt% based on the total weight of the non-aqueous electrolyte. When the content of the third additive is in the above range, the third additive may form a metal fluoride film that is effective for improving the durability on the positive and negative electrodes.

Specifically, if the content of the third additive is less than 1 wt%, the effect of the addition of the third additive may be slight, and if the content of the third additive is greater than 5 wt%, because of low permittivity of the third additive, the ionic conductivity of the electrolyte is reduced, and the excessively decomposed third additive may be a cause that increases the resistance of the battery.

In an embodiment of the present invention, the non-aqueous electrolyte may further include prop-1-ene1,3-sultone as a fourth additive. Prop-1-ene1,3-sultone has an excellent effect of forming a film on the positive and negative electrodes, and may exhibit a further effect of improving high-temperature durability when used together with the first to third additives. The fourth additive has a relatively low decomposition voltage of the negative electrode compared to the first additive, but is quickly decomposed as compared to the solvent.

The content of the fourth additive may be 0.1 wt% to 1 wt%, preferably, 0.1 wt% to 0.5 wt% based on the total weight of the non-aqueous electrolyte. When the content of the fourth additive is in the above range, the fourth additive effectively forms a film on the positive and negative electrodes, and thus surface protection ability thereof is excellent.

Specifically, if the content of the fourth additive is less than 0.1 wt%, the effect of the addition of the fourth additive may be slight, and if the content of the fourth additive is greater than 1 wt%, the resistance of the negative electrode film increases and thus the resistance of the battery increases greatly so that there may occur problems of reducing the output and increasing heat that is generated in the operation.

In an embodiment of the present invention, the non-aqueous electrolyte may include, as a fifth additive, at least one selected from among vinylene carbonate (VC) and 1,3-propane sultone (PS), preferably, both vinylene carbonate (VC) and 1,3-propane sultone (PS).

The content of the fifth additive may be 0.1 wt% to 4 wt%, preferably, 0.2 wt% to 2 wt% based on the total weight of the non-aqueous electrolyte. When the content of the fifth additive is in the above range, the fifth additive may assist in reinforcing the positive and negative electrode films to improve the durability.

Specifically, if the content of the fifth additive is less than 0.1 wt%, the effect of the addition of the fifth additive may be slight, and if the content of the fifth additive is greater than 4 wt%, the resistance of the films increases and thus the resistance of the battery increases so that there may occur problems of reducing the output of the battery and increasing heat generation.

### (2) Organic Solvent

Various organic solvents typically used in a lithium electrolyte may be used as the organic solvent without limitation. For example, the organic solvent may be a cyclic carbonate-based solvent, a linear carbonate-based solvent, or a mixture thereof, and preferably, may include a cyclic carbonate-based solvent and a linear carbonate-based solvent.

The cyclic carbonate-based solvent is a highly viscous organic solvent which may well dissociate the lithium salt in the electrolyte due to high permittivity, and may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and specifically, may include ethylene carbonate (EC).

In addition, the linear carbonate-based solvent is an organic solvent having low viscosity and low permittivity, and may be at least one selected from the group consisting of dimethyl carbonate (DMC), diethyl carbonate (DEC), dipropyl carbonate, ethyl methyl carbonate (EMC), methylpropyl carbonate, and ethylpropyl carbonate, and specifically, may include ethyl methyl carbonate (EMC).

In order to prepare an electrolyte having high ionic conductivity, it is desirable to use a mixture of the cyclic carbonate-based solvent and the linear carbonate-based solvent as the organic solvent.

Furthermore, the organic solvent may further include a linear ester-based solvent and/or a cyclic ester-based solvent in addition to the cyclic carbonate-based solvent and/or the linear carbonate-based solvent.

Specific examples of the linear ester-based solvent may include at least one organic solvent selected from the group consisting of methyl acetate, ethyl acetate, propyl acetate, methyl propionate, ethyl propionate, propyl propionate, and butyl propionate.

In addition, specific examples of the cyclic ester-based solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in an electrolyte for a lithium secondary battery without limitation, if necessary. For example, the organic solvent may further include at least one organic solvent selected from an ether-based solvent, an amide-based solvent, and a nitrile-based solvent.

The other components except for the organic solvent among the total weight of the non-aqueous electrolyte, for example, the additive, the lithium salt, and the remainder except for the content of the additive may be an organic solvent unless otherwise stated.

### (3) Lithium Salt

Any lithium salt typically used in an electrolyte for a lithium secondary battery may be used as the lithium salt without limitation, and, for example, the lithium salt may include Li⁺ as a cation, and may include at least one selected from the group consisting of F⁻, Cl-, Br⁻, I⁻, NO₃⁻, N(CN)₂⁻, BF₄⁻, ClO₄⁻, B₁₀Cl₁₀⁻, AlCl₄⁻, AlO₄⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, BF₂C₂O₄CHF-, PF₄C₂O₄⁻, PF₂C₄O₈⁻, PO₂F₂⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻as an anion.

Specifically, the lithium salt may include one or a mixture of two or more selected from the group consisting of LiPF₆, LiClO₄, LiBF₄, LiFSI, LiTFSI, lithium bis(pentafluoroethanesulfonyl)imide (LiBETI), LiSO₃CF₃, LiPO₂F₂, lithium bis(oxalate)borate (LiBOB), lithium difluoro(oxalate)borate (LiFOB), lithium difluoro(bisoxalato) phosphate (LiDFBP), lithium tetrafluoro(oxalate) phosphate (LiTFOP), and lithium fluoromalonato(difluoro) borate (LiFMDFB), and preferably, at least one selected from among LiPF₆ and LiN(FSO₂)₂(LiFSI) .

The lithium salt may be appropriately changed in a typically usable range, but may be included in a concentration of 0.8 M to 4.0 M, specifically, 1.0 M to 3.0 M in the electrolyte to obtain an optimum effect of forming a film for preventing corrosion of the surface of the electrode.

If the concentration of the lithium salt is less than 0.8 M, effects of improving low-temperature output of the lithium secondary battery and improving cycle characteristics are slight, and if the concentration of the lithium salt is greater than 4.0 M, the electrolyte wetting may be reduced due to an increase in the viscosity of the non-aqueous electrolyte solution.

### Lithium Secondary Battery

Next, a lithium secondary battery according to the present invention will be described.

The lithium secondary battery according to the present invention includes a positive electrode, a negative electrode, a separator interposed between the positive electrode and the negative electrode, and a non-aqueous electrolyte, and, in this case, the non-aqueous electrolyte is the non-aqueous electrolyte according to the present invention. Since the non-aqueous electrolyte has been described above, a description thereof will be omitted and other components will be described below.

### (1) Positive Electrode

The positive electrode according to the present invention may include a positive electrode active material and be prepared by coating a positive electrode collector with a positive electrode slurry containing the positive electrode active material, a binder, a conductive agent, a solvent, etc., and then drying and rolling the coated positive electrode collector.

The positive electrode collector is not particularly limited so long as it has conductivity without causing adverse chemical changes in the battery, and, for example, stainless steel; aluminum; nickel; titanium; sintered carbon; or aluminum or stainless steel of which the surface is treated with carbon, nickel, titanium, silver, or the like may be used.

The positive electrode active material includes a lithium composite transition metal oxide containing nickel (Ni), cobalt (Co), and manganese (Mn), and the lithium composite transition metal oxide may be represented by Formula 3 below:

[Formula 3] Li (NiₐCo_{b}Mn_{c}M_{d})O₂

In Formula 3,
M is W, Cu, Fe, V, Cr, Ti, Zr, Zn, Al, In, Ta, Y, La, Sr, Ga, Sc, Gd, Sm, Ca, Ce, Nb, Mg, B, or Mo,
a, b, c, and d are atomic fractions of each independent elements, which satisfy 0.5≤a<1, 0<b≤0.3, 0<c≤0.3, 0≤d≤0.05, and a+b+c+d=1.

Specifically, a, b, c, and d in Formula 3 may be 0.70≤a≤0.95, 0.025≤b≤0.20, 0.025≤c≤0.20, and 0≤d≤0.03, respectively.

More specifically, a, b, c, and d in Formula 3 may be 0.80≤a≤0.95, 0.025≤b≤0.15, 0.025≤c≤0.15, and 0≤d≤0.03, respectively.

In addition, a, b, c, and d in Formula 3 may be 0.83≤a≤0.90, 0.05≤b≤0.1, 0.05≤c≤0.1, and 0≤d≤0.03, respectively.

Preferably, M in Formula 3 may be Al.

In the case of an NCM positive electrode active material containing nickel (Ni), cobalt (Co), and manganese (Mn), the higher content of Ni, the higher energy density may be realized, but there is a fault of deterioration in the surface reactivity and stability of the positive electrode, and the introduction of aluminum (Al) as the M may make up for the fault.

The positive electrode active material may be included in an amount of 80 wt% to 99 wt%, for example, 90 wt% to 99 wt%, based on a total weight of solid content in the positive electrode slurry. When the amount of the positive electrode active material is 80 wt% or less, since energy density is decreased, capacity may be reduced.

The binder is a component that assists in the binding between the active material and the conductive agent and in the binding with the current collector, and may be commonly added in an amount of 1 wt% to 30 wt% based on the total weight of the solid content in the positive electrode slurry. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene ter monomer, a styrene-butadiene rubber, a fluoro rubber, various copolymers thereof, or the like.

In addition, the conductive agent is a material providing conductivity without causing adverse chemical changes in the battery, and may be added in an amount of 0.5 wt% to 20 wt% based on the total weight of the solid content in the positive electrode slurry.

Examples of the conductive agent may include a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, and nickel powder; conductive whiskers such as zinc oxide whiskers or potassium titanate whiskers; conductive metal oxide such as titanium oxide; or polyphenylene derivatives.

In addition, the solvent for the positive electrode slurry may include an organic solvent, such as N-methyl-2-pyrrolidone (NMP), and may be used in an amount such that desirable viscosity is obtained when the positive electrode active material, the binder, the conductive agent, and the like are included. For example, the solvent may be included in an amount such that a concentration of the solid content in the positive electrode slurry containing the positive electrode active material, the binder, and the conductive agent is in a range of 5 wt% to 90 wt%, preferably, 5 wt% to 80 wt%.

### (2) Negative Electrode

The negative electrode according to the present invention may include a negative electrode active material and be prepared by coating a negative electrode collector with a negative electrode slurry containing the negative electrode active material, a binder, a conductive agent, a solvent, etc., and then drying and rolling the coated negative electrode collector.

The negative electrode collector generally has a thickness of 3 um to 500 um. The negative electrode collector is not particularly limited so long as it has high conductivity without causing adverse chemical changes in the battery, and, for example, copper; stainless steel; aluminum; nickel; titanium; sintered carbon; copper or stainless steel of which the surface is treated with carbon, nickel, titanium, silver, or the like; or an aluminum-cadmium alloy may be used. In addition, like the positive electrode current collector, the negative electrode current collector may have a finely uneven surface to enhance bonding strength with the negative electrode active material, and may be used in various shapes such as a film, a sheet, a foil, a net, a porous body, a foam body, and a non-woven fabric body.

Furthermore, the negative electrode active material may include at least one selected from among: a carbon material capable of reversibly intercalating/deintercalating lithium ions; a metal or an alloy of lithium and the metal; a metal composite oxide; a material which may be doped and undoped with lithium; a lithium metal; and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may include graphite such as irregular, planar, flaky, spherical, or fibrous natural graphite or artificial graphite, and examples of the amorphous carbon may include soft carbon (low-temperature sintered carbon) or hard carbon, mesophase pitch carbide, sintered cokes, and the like.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn), or an alloy of lithium and the metal may be used.

At least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (where: Me is Mn, Fe, Pb, or Ge; Me' is Al, B, P, Si, Groups I, II and III elements of the periodic table, or halogen; 0<x≤1; 1≤y≤3; and 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

Examples of the transition metal oxide may include lithium-containing titanium composite oxide (LTO), vanadium oxide, lithium vanadium oxide, and the like.

The negative electrode active material may be included in an amount of 80 wt% to 99 wt% based on a total weight of solid content in the negative electrode active material slurry.

The binder is a component that assists in the binding among the conductive agent, the active material, and the current collector, and may be commonly added in an amount of 1 wt% to 30 wt% based on the total weight of the solid content in the negative electrode slurry. Examples of the binder may include polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene monomer, a styrene-butadiene rubber, a fluoro rubber, various copolymers thereof, or the like.

The conductive agent is a component for further improving the conductivity of the negative electrode active material, and may be added in an amount of 0.5 wt% to 20 wt% based on the total weight of the solid content in the negative electrode slurry. Any conductive agent may be used without particular limitation so long as it has conductivity without causing adverse chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, carbon nanotubes, or graphite; conductive fibers such as carbon fibers or metal fibers; conductive powder such as fluorocarbon powder, aluminum powder, or nickel powder; conductive whiskers such as zinc oxide whiskers or potassium titanate whiskers; conductive metal oxide such as titanium oxide; or polyphenylene derivatives, may be used.

The solvent for the negative electrode slurry may include water or an organic solvent, such as NMP and alcohol, and may be used in an amount such that desirable viscosity is obtained when the negative electrode active material, the binder, the conductive agent, and the like are included. For example, the solvent may be included in an amount such that a concentration of the solid content in the slurry containing the negative electrode active material, the binder, and the conductive agent is in a range of 30 wt% to 80 wt%, preferably, 40 wt% to 70 wt%.

### (3) Separator

The lithium secondary battery according to the present invention includes a separator between the positive electrode and the negative electrode.

The separator separates the negative electrode and the positive electrode and provides a movement path of lithium ions, and any separator may be used as the separator without particular limitation as long as it is typically used in a lithium secondary battery, and particularly, a separator having excellent wettability of the electrolyte and excellent stability as well as low resistance to the transfer of electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer; or a laminated structure having two or more layers thereof may be used as the separator. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and may be used in a single-layered or multi-layered structure.

The lithium secondary battery according to the present invention as described above may be useful for portable devices, such as mobile phones, notebook computers, and digital cameras, electric cars such as hybrid electric vehicles (HEVs), and the like.

Thus, according to another embodiment of the present invention, there are provided a battery module including the lithium secondary battery as a unit cell, and a battery pack including the battery module.

The battery module or the battery pack may be used as a power source of at least one medium-and-large-sized device among a power tool, an electric car including an electric vehicle (EV), a hybrid electric vehicle (HEV), and a plug-in hybrid electric vehicle (PHEV), and a system for storing power.

A shape of the lithium secondary battery of the present invention is not particularly limited, but may be a cylindrical type using a can, a prismatic type, a pouch type, a coin type, or the like.

The lithium secondary battery according to the present invention may not only be used in a battery cell that is used as a power source of a small device, but may also be preferably used as a unit cell in a medium-and-large-sized battery module including a plurality of battery cells.

Hereinafter, the present invention will be described in detail with reference to specific examples.

### MODE FOR CARRYING OUT THE INVENTION

### <Examples>

### Example 1.

### (Preparation of Non-aqueous Electrolyte)

A non-aqueous organic solution was prepared by mixing ethylene carbonate (EC) and ethyl methyl carbonate (EMC) in a volume ratio of 30:70 and then dissolving LiPF₆ in the mixture so as to be 1.0 M. Propargyl 1H-imidazole-1-carboxylate (HSO2, 0.3 wt%), lithium difluorophosphate (DFP, 1wt%), methyl 2,2,2-trifluoroethyl carbonate (FEMC, 3wt%), and prop-1-ene-1,3-sultone (PRS, 0.3wt%) were added to the non-aqueous organic solution (95.4 wt%) to prepare a non-aqueous electrolyte (100 wt%).

### (Preparation of Lithium Secondary Battery)

A positive electrode active material (LiNi_{0.85}Co_{0.05}Mn_{0.08}Al_{0.02}O₂), a conductive agent (carbon black), and a binder (polyvinylidene fluoride) were added to N-methyl-2-pyrrolidone (NMP) at a weight ratio of 98:0.7:1.3 to prepare a positive electrode slurry (solid content: 7 wt%). A 12 µm-thick aluminum (Al) thin film, which is a positive electrode current collector, was coated with the positive electrode slurry, dried, and then roll-pressed to prepare a positive electrode.

A negative electrode active material (graphite:SiO=94.5:5.5 weight ratio), a binder (SBR- CMC), and a conductive agent (carbon black) were added in a weight ratio of 96.7:2.3:1 to water, which is a solvent, to prepare a negative electrode slurry (solid content: 50 wt%). An 8 um-thick copper (Cu) thin film, which is a negative electrode current collector, was coated with the negative electrode slurry, dried, and then roll-pressed to prepare a negative electrode.

An electrode assembly was prepared by sequentially stacking the positive electrode, a polyolefin-based porous separator coated with inorganic particles (Al₂O₃), and the negative electrode.

The electrode assembly was accommodated in a pouch-type battery case, and the prepared non-aqueous electrolyte was injected thereinto to prepare a lithium secondary battery.

### Example 2.

A non-aqueous electrolyte was prepared in the same manner as in Example 1 except that the prop-1-ene-1,3-sultone was not added and the content of the non-aqueous organic solution was changed to 95.7 wt%.

A lithium secondary battery was prepared in the same manner as in Example 1 except that the prepared non-aqueous electrolyte was injected.

### Example 3.

A non-aqueous electrolyte was prepared in the same manner as in Example 1 except that the prop-1-ene-1,3-sultone was not added, vinylene carbonate (VC) was added in an amount of 0.5 wt%, and the content of the non-aqueous organic solution was changed to 95.2 wt%.

A lithium secondary battery was prepared in the same manner as in Example 1 except that the prepared non-aqueous electrolyte was injected.

### Example 4.

A non-aqueous electrolyte was prepared in the same manner as in Example 1 except that the prop-1-ene-1,3-sultone was not added, 1,3-propane sultone (PS) was added in an amount of 0.5 wt%, and the content of the non-aqueous organic solution was changed to 95.2 wt%.

A lithium secondary battery was prepared in the same manner as in Example 1 except that the prepared non-aqueous electrolyte was injected.

### Example 5.

A non-aqueous electrolyte was prepared in the same manner as in Example 1 except that the prop-1-ene-1,3-sultone was not added, the content of 1H-imidazole-1-carboxylate was changed to 0.1 wt%, and the content of the non-aqueous organic solution was changed to 95.9 wt%.

A lithium secondary battery was prepared in the same manner as in Example 1 except that the prepared non-aqueous electrolyte was injected.

### Comparative Example 1.

A non-aqueous electrolyte was prepared in the same manner as in Example 1 except that the lithium difluorophosphate was not added and the content of the non-aqueous organic solution was changed to 96.4 wt%.

A lithium secondary battery was prepared in the same manner as in Example 1 except that the prepared non-aqueous electrolyte was injected.

### Comparative Example 2.

A non-aqueous electrolyte was prepared in the same manner as in Example 1 except that the propargyl 1H-imidazole-1-carboxylate was not added and the content of the non-aqueous organic solution was changed to 95.7 wt%.

A lithium secondary battery was prepared in the same manner as in Example 1 except that the prepared non-aqueous electrolyte was injected.

### Comparative Example 3.

A non-aqueous electrolyte was prepared in the same manner as in Example 1 except that the methyl 2,2,2-trifluoroethyl carbonate was not added and the content of the non-aqueous organic solution was changed to 98.4 wt%.

A lithium secondary battery was prepared in the same manner as in Example 1 except that the prepared non-aqueous electrolyte was injected.

### Comparative Example 4.

A non-aqueous electrolyte was prepared in the same manner as in Example 1 except that the lithium difluorophosphate and the prop-1-ene-1,3-sultone were not added and the content of the non-aqueous organic solution was changed to 96.7 wt%.

A lithium secondary battery was prepared in the same manner as in Example 1 except that the prepared non-aqueous electrolyte was injected.

### Comparative Example 5.

A non-aqueous electrolyte was prepared in the same manner as in Example 1 except that the propargyl 1H-imidazole-1-carboxylate and the prop-1-ene-1,3-sultone were not added and the content of the non-aqueous organic solution was changed to 96 wt%.

A lithium secondary battery was prepared in the same manner as in Example 1 except that the prepared non-aqueous electrolyte was injected.

### Comparative Example 6.

A non-aqueous electrolyte was prepared in the same manner as in Example 1 except that the methyl 2,2,2-trifluoroethyl carbonate and the prop-1-ene-1,3-sultone were not added and the content of the non-aqueous organic solution was changed to 98.7 wt%.

A lithium secondary battery was prepared in the same manner as in Example 1 except that the prepared non-aqueous electrolyte was injected.

### <Experimental Example>

The volume change rate and the resistance increase rate after high-temperature storage of the lithium secondary battery prepared in Examples 1 to 5 and Comparative Examples 1 to 6 were measured as follows.

### [Volume Change Rate (%) Compared to Example 1]

Each lithium secondary battery prepared in Examples 1 to 5 and Comparative Examples 1 to 6 was fully charged at 0.33 C/4.2 V under a constant current-constant voltage condition at 25 °C and fully discharged at 0.33 C/2.5 V under a constant current to perform initial charge and discharge, and each lithium secondary battery was discharged at 2.5 C for 10 seconds at an SOC of 50% to identify an initial resistance.

Each lithium secondary battery subjected to the initial charge and discharge was charged at 4.2 V and stored at 60 °C for 4 weeks (an SOC of 100%), and then the volume after storing the lithium secondary battery at high temperatures was measured by putting the insulated lithium secondary battery into a bowl filled with distilled water at room temperature by means of TWD-150DM equipment manufactured by Two-pls, Co.

Table 1 below shows how much increased volume each of Examples 2 to 5 and Comparative Examples 1 to 6 has compared to Example 1, based on the volume after high-temperature storage of the battery prepared in Example 1.

### [Resistance Increase Rate (%) Compared to Example 1]

Each lithium secondary battery prepared in Examples 1 to 5 and Comparative Examples 1 to 6 was fully charged at 0.33 C/4.2 V under a constant current-constant voltage condition at 25 °C and fully discharged at 0.33 C/2.5 V under a constant current, and thus initial charging and discharging were performed, and each lithium secondary battery was discharged at 2.5 C for 10 seconds at an SOC of 50% to identify an initial resistance. A resistance value was calculated by dividing a dropped voltage during the discharge by a current. In this case, the voltage was measured by using PNE-0506 charge/discharge equipment (manufacturer: PNE SOLUTION Co., Ltd., 5V, 6A).

Each lithium secondary battery subjected to the initial charge and discharge was stored at 60 °C for 4 weeks (an SOC of 100%), and then the capacity was confirmed by performing the same manner as the initial charge and discharge, and similarly, the resistance increase rate was calculated by measuring the resistance in the same manner as above.

Table 1 below shows how much increased resistance value each of Examples 2 to 5 and Comparative Examples 1 to 6 has compared to Example 1, based on the resistance value after high-temperature storage of the battery prepared in Example 1.

**[Table 1]**

| | Additive content (wt%) | | | | | Comparison with Example 1 after high-temperature storage | |
|---|---|---|---|---|---|---|---|
| | First (HS02) | Second (DFP) | Third (FEMC) | Fourth (PRS) | Fifth | Volume change rate | Resistance increase rate |
| Example 1 | 0.3 | 1 | 3 | 0.3 | - | - | - |
| Example 2 | 0.3 | 1 | 3 | - | - | 3.20% | 2.40% |
| Example 3 | 0.3 | 1 | 3 | - | VC 0.5 | 3.0% | 1.3% |
| Example 4 | 0.3 | 1 | 3 | - | PS 0.5 | 2.5% | 1.7% |
| Example 5 | 0.1 | 1 | 3 | - | - | 3.10% | 2.60% |
| Comparative Example 1 | 0.3 | - | 3 | 0.3 | - | 6.40% | 13.20% |
| Comparative Example 2 | - | 1 | 3 | 0.3 | - | 4.90% | 7.60% |
| Comparative Example 3 | 0.3 | 1 | - | 0.3 | - | 5.50% | 4.90% |
| Comparative Example 4 | 0.3 | - | 3 | - | - | 9.2% | 17.3% |
| Comparative Example 5 | - | 1 | 3 | - | - | 7.3% | 11.5% |
| Comparative Example 6 | 0.3 | 1 | - | - | - | 8.0% | 7.7% |

Through the results of Table 1, it may be confirmed that the batteries prepared in Examples 1 to 5, the batteries including all of the first to third additives have still less changes in volume and resistance after high-temperature storage than those in Comparative Examples 1 to 6. In particular, it may be confirmed that Example 1 using all of the first to fourth additives has the least changes in volume and resistance.

In addition, it may be confirmed that in Example 3, VC as the fifth additive was further included, and thus resistance increase rate was improved due to an effect of reinforcing the negative electrode, and it may be confirmed that in Example 4, PS used as the fifth additive has an excellent effect of reducing a gas generation amount, and thus the volume change rate was improved.

Meanwhile, it may be confirmed that under the condition including PRS equally to Example 1, Comparative Examples 1 to 3 that do not include any one among the first to third additives have still greater change rates in volume and resistance than Example 1.

In addition, it may be confirmed that under the condition excluding PRS equally to Example 2, Comparative Examples 4 to 6 that do not include any one among the first to third additives also have still greater change rates in volume and resistance than Example 2. When the lithium secondary battery is stored at high temperatures, an oxidized gas such as CO₂ is generated on the positive electrode due to the solvent side reactions, and as the period of storage gets longer, the generation amount increases more rapidly. If the bubbles generated by the gas generation are present on the surface of the electrode, the reaction area is reduced. The generated bubbles are nonconductors, and thus serve as a resistor, and higher current flows in the reduced area to lead to a large voltage drop, thereby increasing resistance.

That is, it may be seen that the lithium secondary battery including the non-aqueous electrolyte according to the present invention has an effect of improving durability by forming the positive electrode film, and accordingly, the volume change rate and resistance increase rate are improved as the experimental results.

## Claims

1. A non-aqueous electrolyte for a lithium secondary battery comprising:
a lithium salt;
an organic solvent;
a compound represented by Formula 1 below as a first additive;
lithium difluorophosphate as a second additive; and
a compound represented by Formula 2 below as a third additive: 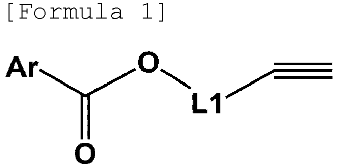
wherein, in Formula 1,
Ar is a 5-membered or 6-membered nitrogen-containing ring, and
L1 is a C1-C3 alkylene group, and 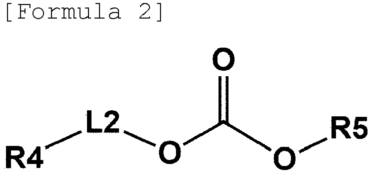
wherein, in Formula 2,
L2 is a direct linkage, or a C1-C3 alkylene group,
R4 is a C1-C3 alkyl group substituted with at least one fluorine, and
R5 is a C1-C3 alkyl group.

2. The non-aqueous electrolyte for a lithium secondary battery of claim 1, wherein the compound represented by Formula 1 is represented by Formula 1A below: 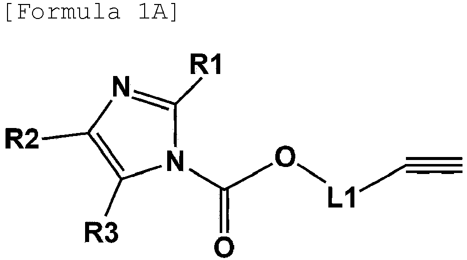
wherein, in Formula 1A,
L1 is a C1-C3 alkylene group, and
R1 to R3 are each independently hydrogen, or a C1-C3 alkyl group.

3. The non-aqueous electrolyte for a lithium secondary battery of claim 1, wherein the compound represented by Formula 1 is propargyl 1H-imidazole-1-carboxylate.

4. The non-aqueous electrolyte for a lithium secondary battery of claim 1, wherein L2 in Formula 2 is a direct linkage or a methylene group, R4 is a C1 or C2 alkyl group substituted with at least one fluorine, and R5 is a methyl group or an ethyl group.

5. The non-aqueous electrolyte for a lithium secondary battery of claim 1, wherein the compound represented by Formula 2 is methyl 2,2,2-trifluoroethyl carbonate.

6. The non-aqueous electrolyte for a lithium secondary battery of claim 1, wherein the content of the first additive is 0.1 wt% to 1 wt% based on a total weight of the non-aqueous electrolyte.

7. The non-aqueous electrolyte for a lithium secondary battery of claim 1, wherein the content of the second additive is 0.1 wt% to 1.5 wt% based on a total weight of the non-aqueous electrolyte.

8. The non-aqueous electrolyte for a lithium secondary battery of claim 1, wherein the content of the third additive is 1 wt% to 5 wt% based on a total weight of the non-aqueous electrolyte.

9. The non-aqueous electrolyte for a lithium secondary battery of claim 1, further comprising prop-1-ene-1,3-sultone as a fourth additive.

10. The non-aqueous electrolyte for a lithium secondary battery of claim 9, wherein the content of the fourth additive is 0.1 wt% to 1 wt% based on a total weight of the non-aqueous electrolyte.

11. The non-aqueous electrolyte for a lithium secondary battery of claim 1, further comprising, as a fifth additive, at least one selected from among vinylene carbonate (VC) and 1,3-propane sultone (PS).

12. The non-aqueous electrolyte for a lithium secondary battery of claim 1, wherein the organic solvent comprises a cyclic carbonate-based solvent and a linear carbonate-based solvent.

13. A lithium secondary battery comprising:
a positive electrode including a positive electrode active material;
a negative electrode including a negative electrode active material;
a separator interposed between the positive electrode and the negative electrode; and
the non-aqueous electrolyte of claim 1.

14. The lithium secondary battery of claim 13, wherein the positive electrode active material comprises a lithium composite transition metal oxide represented by Formula 3 below:
[Formula 3] Li (NiₐCo_{b}Mn_{c}M_{d})O₂
wherein, in Formula 3,
M is W, Cu, Fe, V, Cr, Ti, Zr, Zn, Al, In, Ta, Y, La, Sr, Ga, Sc, Gd, Sm, Ca, Ce, Nb, Mg, B, or Mo, and
a, b, c, and d are atomic fractions of each independent elements, which satisfy 0.5≤a<1, 0<b≤0.3, 0<c≤0.3, 0≤d≤0.05, and a+b+c+d=1.

15. The lithium secondary battery of claim 14, wherein a, b, c, and d in Formula 3 are 0.70≤a≤0.95, 0.025≤b≤0.20, 0.025≤c≤0.20, and 0≤d≤0.03, respectively.

## Patentansprüche

1. Nichtwässriger Elektrolyt für eine Lithiumsekundärbatterie, umfassend:
ein Lithiumsalz,
ein organisches Lösungsmittel,
eine durch die nachstehende Formel 1 dargestellte Verbindung als ein erstes Additiv,
Lithiumdifluorphosphat als ein zweites Additiv und
eine durch die nachstehende Formel 2 dargestellte Verbindung als ein drittes Additiv: 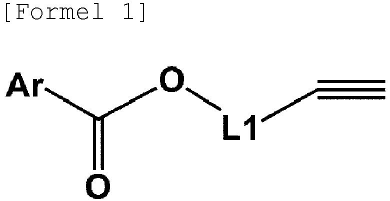
wobei in Formel 1
Ar ein 5-gliedriger oder 6-gliedriger stickstoffhaltiger Ring ist und
L1 eine C1-C3-Alkylengruppe ist, und 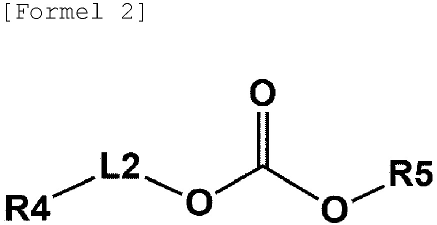
wobei in Formel 2
L2 eine direkte Verknüpfung oder eine C1-C3-Alkylengruppe ist,
R4 eine C1-C3-Alkylgruppe ist, die mit mindestens einem Fluor substituiert ist, und
R5 eine C1-C3-Alkylgruppe ist.

2. Nichtwässriger Elektrolyt für eine Lithiumsekundärbatterie nach Anspruch 1, wobei die durch Formel 1 dargestellte Verbindung durch die nachstehende Formel 1A dargestellt ist: 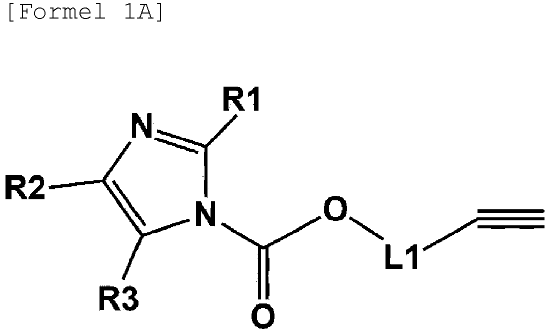
wobei in Formel 1A
L1 eine C1-C3-Alkylengruppe ist und
R1 bis R3 jeweils unabhängig Wasserstoff oder eine C1-C3-Alkylgruppe sind.

3. Nichtwässriger Elektrolyt für eine Lithiumsekundärbatterie nach Anspruch 1, wobei die durch Formel 1 dargestellte Verbindung Propargyl-1H-imidazol-1-carboxylat ist.

4. Nichtwässriger Elektrolyt für eine Lithiumsekundärbatterie nach Anspruch 1, wobei L2 in Formel 2 eine direkte Verknüpfung oder eine Methylengruppe ist, R⁴ eine C1- oder C2-Alkylgruppe ist, die mit mindestens einem Fluor substituiert ist, und R5 eine Methylgruppe oder eine Ethylgruppe ist.

5. Nichtwässriger Elektrolyt für eine Lithiumsekundärbatterie nach Anspruch 1, wobei die durch Formel 2 dargestellte Verbindung Methyl-2,2,2-trifluorethylcarbonat ist.

6. Nichtwässriger Elektrolyt für eine Lithiumsekundärbatterie nach Anspruch 1, wobei der Gehalt des ersten Additivs 0,1 Gew.-% bis 1 Gew.-%, bezogen auf ein Gesamtgewicht des nichtwässrigen Elektrolyten, beträgt.

7. Nichtwässriger Elektrolyt für eine Lithiumsekundärbatterie nach Anspruch 1, wobei der Gehalt des zweiten Additivs 0,1 Gew.-% bis 1,5 Gew.-%, bezogen auf ein Gesamtgewicht des nichtwässrigen Elektrolyten, beträgt.

8. Nichtwässriger Elektrolyt für eine Lithiumsekundärbatterie nach Anspruch 1, wobei der Gehalt des dritten Additivs 1 Gew.-% bis 5 Gew.-%, bezogen auf ein Gesamtgewicht des nichtwässrigen Elektrolyten, beträgt.

9. Nichtwässriger Elektrolyt für eine Lithiumsekundärbatterie nach Anspruch 1, ferner umfassend Prop-1-en-1,3-sulton als ein viertes Additiv.

10. Nichtwässriger Elektrolyt für eine Lithiumsekundärbatterie nach Anspruch 9, wobei der Gehalt des vierten Additivs 0,1 Gew.-% bis 1 Gew.-%, bezogen auf ein Gesamtgewicht des nichtwässrigen Elektrolyten, beträgt.

11. Nichtwässriger Elektrolyt für eine Lithiumsekundärbatterie nach Anspruch 1, ferner umfassend als ein fünftes Additiv mindestens eines, ausgewählt unter Vinylencarbonat (VC) und 1,3-Propansulton (PS).

12. Nichtwässriger Elektrolyt für eine Lithiumsekundärbatterie nach Anspruch 1, wobei das organische Lösungsmittel ein Lösungsmittel auf Basis eines cyclischen Carbonats und ein Lösungsmittel auf Basis eines linearen Carbonats umfasst.

13. Lithiumsekundärbatterie, umfassend:
eine positive Elektrode, die ein Aktivmaterial für eine positive Elektrode einschließt,
eine negative Elektrode, die ein Aktivmaterial für eine negative Elektrode einschließt,
einen Separator, der zwischen der positiven Elektrode und der negativen Elektrode eingefügt ist, und
den nichtwässrigen Elektrolyten nach Anspruch 1.

14. Lithiumsekundärbatterie nach Anspruch 13, wobei das Aktivmaterial für eine positive Elektrode ein durch die nachstehende Formel 3 dargestelltes Lithium-Übergangsmetall-Mischoxid umfasst:
[Formel 3] Li(NiₐCO_{b}Mn_{c}M_{d})O₂
wobei in Formel 3
M W, Cu, Fe, V, Cr, Ti, Zr, Zn, Al, In, Ta, Y, La, Sr, Ga, Sc, Gd, Sm, Ca, Ce, Nb, Mg, B oder Mo ist und
a, b, c und d Atomanteile der jeweiligen unabhängigen Elemente sind, die 0,5≤a<1, 0<b≤0,3, 0<c≤0,3, 0≤d≤0,05 und a+b+c+d=1 erfüllen.

15. Lithiumsekundärbatterie nach Anspruch 14, wobei a, b, c und d in Formel 3 0,70≤a≤0,95, 0,025≤b≤0,20, 0,025≤c≤0,20 bzw. 0≤d≤0,03 sind.

## Revendications

1. Électrolyte non aqueux pour une batterie secondaire au lithium, comprenant :
un sel de lithium ;
un solvant organique ;
un composé représenté par la Formule 1 ci-dessous en tant que premier additif ;
du difluorophosphate de lithium en tant que deuxième additif ; et
un composé représenté par la Formule 2 ci-dessous en tant que troisième additif : 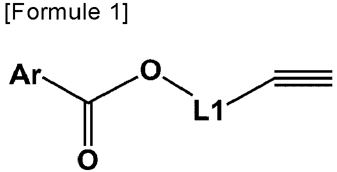
dans lequel, dans la Formule 1,
Ar est un cycle contenant de l'azote et comprenant 5 éléments ou 6 éléments, et
L1 est un groupe alkylène en C1-C3, et 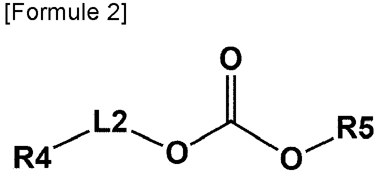
dans lequel, dans la Formule 2,
L2 est une liaison directe, ou un groupe alkylène en C1-C3,
R4 est un groupe alkyle en C1-C3 substitué par au moins un fluor, et
R5 est un groupe alkyle en C1-C3.

2. Électrolyte non aqueux pour une batterie secondaire au lithium selon la revendication 1, dans lequel le composé représenté par la Formule 1 est représenté par la Formule 1A ci-dessous : 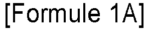 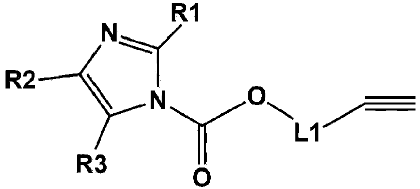
dans lequel, dans la Formule 1A,
L1 est un groupe alkylène en C1-C3, et
R1 à R3 sont chacun indépendamment hydrogène, ou un groupe alkyle en C1-C3.

3. Électrolyte non aqueux pour une batterie secondaire au lithium selon la revendication 1, dans lequel le composé représenté par la Formule 1 est le 1H-imidazole-1-carboxylate de propargyle.

4. Électrolyte non aqueux pour une batterie secondaire au lithium selon la revendication 1, dans lequel L2 dans la Formule 2 est une liaison directe ou un groupe méthylène, R4 est un groupe alkyle en C1 ou C2 substitué par au moins un fluor, et R5 est un groupe méthyle ou un groupe éthyle.

5. Électrolyte non aqueux pour une batterie secondaire au lithium selon la revendication 1, dans lequel le composé représenté par la Formule 2 est le carbonate de méthyl-2,2,2-trifluoroéthyle.

6. Électrolyte non aqueux pour une batterie secondaire au lithium selon la revendication 1, dans lequel la teneur du premier additif est de 0,1 % en poids à 1 % en poids sur la base d'un poids total de l'électrolyte non aqueux.

7. Électrolyte non aqueux pour une batterie secondaire au lithium selon la revendication 1, dans lequel la teneur du deuxième additif est de 0,1 % en poids à 1,5 % en poids sur la base d'un poids total de l'électrolyte non aqueux.

8. Électrolyte non aqueux pour une batterie secondaire au lithium selon la revendication 1, dans lequel la teneur du troisième additif est de 1 % en poids à 5 % en poids sur la base d'un poids total de l'électrolyte non aqueux.

9. Électrolyte non aqueux pour une batterie secondaire au lithium selon la revendication 1, comprenant en outre de la prop-1-ène-1,3-sultone en tant que quatrième additif.

10. Électrolyte non aqueux pour une batterie secondaire au lithium selon la revendication 9, dans lequel la teneur du quatrième additif est de 0,1 % en poids à 1 % en poids sur la base d'un poids total de l'électrolyte non aqueux.

11. Électrolyte non aqueux pour une batterie secondaire au lithium selon la revendication 1, comprenant en outre, en tant que cinquième additif, au moins un composé sélectionné parmi le carbonate de vinylène (VC) et le sultone de 1,3-propane (PS).

12. Électrolyte non aqueux pour une batterie secondaire au lithium selon la revendication 1, dans lequel le solvant organique comprend un solvant à base d'un carbonate cyclique et un solvant à base d'un carbonate linéaire.

13. Batterie secondaire au lithium comprenant :
une électrode positive incluant un matériau actif d'électrode positive ;
une électrode négative incluant un matériau actif d'électrode négative ;
un séparateur interposé entre l'électrode positive et l'électrode négative ; et
l'électrolyte non aqueux selon la revendication 1.

14. Batterie secondaire au lithium selon la revendication 13, dans laquelle le matériau actif d'électrode positive comprend un oxyde de métal de transition composite au lithium représenté par la Formule 3 ci-dessous :
[Formule 3] Li(NiₐC_{Ob}Mn_{c}M_{d})O₂
dans laquelle, dans la Formule 3,
M est W, Cu, Fe, V, Cr, Ti, Zr, Zn, Al, In, Ta, Y, La, Sr, Ga, Sc, Gd, Sm, Ca, Ce, Nb, Mg, B, ou Mo, et
a, b, c et d sont des fractions atomiques de chaque élément indépendant, qui satisfont à 0,5 ≤ a< 1, 0 < b ≤ 0,3, 0 < c ≤ 0,3, 0 ≤ d ≤ 0,05, et a + b + c + d = 1.

15. Batterie secondaire au lithium selon la revendication 14, dans laquelle a, b, c, et d dans la Formule 3 sont 0,70 ≤ a ≤ 0,95, 0,025 ≤ b ≤ 0,20, 0,025 ≤ c ≤ 0,20, et 0 ≤ d ≤ 0,03, respectivement.
